# FASCICULE DE BREVET EUROPEEN

(11) **EP 1 774 484 B1**
(45) Date de publication et mention de la délivrance du brevet: **03.06.2009**
(21) Numéro de dépôt: 05763006.3
(22) Date de dépôt: 22.07.2005
(51) Int. Cl.: G07F 7/10

(54) **ENREGISTREMENT D'UNE CLE DANS UN CIRCUIT INTEGRE**
AUFZEICHNEN EINES SCHLÜSSELS IN EINE INTEGRIERTE SCHALTUNG
RECORDING A KEY INTO AN INTEGRATED CIRCUIT

(30) Priorité: 26.07.2004 FR 0451657
(43) Date de publication de la demande: 18.04.2007
(73) Titulaire: PROTON WORLD INTERNATIONAL N.V., 1930 ZAVENTEM (BE)
(72) Inventeur: DAEMEN, Joan, B-3900 OVERPELT (BE); HUQUE, Thierry, B-4280 HANNUT (BE); FONTAINE, Paul, B-3020 WINKSELE (BE)
(74) Mandataire: de Beaumont, Michel
(86) Numéro de dépôt international: PCT/EP2005/053574
(87) Numéro de publication internationale: WO 2006/013162

(56) Documents cités:
- FR-A- 2 601 795
- FR-A- 2 681 165
- FR-A- 2 704 081
- FR-A- 2 810 139
- US-A1- 2003 145 203
- US-A1- 2003 212 894

## Description

### Domaine de l'invention

La présente invention concerne de façon générale le domaine des circuits intégrés manipulant des clés secrètes, que ce soit pour chiffrer des données à communiquer à l'extérieur du circuit ou pour autoriser l'accès à des applications.

L'invention concerne plus particulièrement l'utilisation faite d'une clé secrète propre à un circuit intégré lors de l'installation d'applications (programmes) dans ce circuit.

Un exemple d'application de la présente invention concerne les cartes à puces qui, après fabrication, sont personnalisées, non par le fabricant, mais par le fournisseur de l'application (réseau de transport, établissement bancaire, etc.). En pratique, une carte à puce sort de fabrication avec une clé (native) qui lui est propre, stockée dans une mémoire non volatile. Cette clé est utilisée dans une phase dite de personnalisation pour authentifier la carte lorsqu'un fournisseur d'application souhaite y transférer des informations, par exemple, un programme, et pour chiffrer les échanges dans cette phase de personnalisation jusqu'au transfert, dans la mémoire non volatile de la carte, d'une nouvelle clé secrète liée à l'application.

### Exposé de l'art antérieur

Généralement, la personnalisation met en oeuvre un processus de chiffrement symétrique, c'est-à-dire à clé secrète partagée des deux éléments communiquant entre eux (la carte à personnaliser et le module de personnalisation). Le module de personnalisation doit donc connaître ou être en mesure de reconstituer la clé sécrète de n'importe quelle puce qu'il est censé personnaliser. En pratique, le module de personnalisation possède, en mémoire, une clé dite maître qui lui permet de reconstituer, à partir d'un identifiant d'une puce, la clé secrète de celle-ci. Il utilise alors cette clé reconstituée pour signer (chiffrer) les commandes qu'il envoie à la puce et, notamment, les écritures de programmes ou les clés des applications. En fin de personnalisation, le module remplace la clé native de la puce par une autre clé secrète. Pour que la carte accepte d'écraser, dans sa mémoire non volatile, sa clé secrète native par cette nouvelle clé secrète, il faut qu'elle lui soit transmise chiffrée avec l'ancienne clé. Une fois la clé secrète remplacée, la clé native ne peut plus être utilisée.

La personnalisation de cartes à puce est une phase particulièrement sensible aux attaques visant à découvrir les clés secrètes, car la connaissance d'une clé maître permet généralement de pirater tout un lot de cartes ou de personnaliser frauduleusement d'autres cartes.

Une première technique connue de personnalisation consiste à placer chaque puce dans un lecteur dédié au fournisseur d'application. On parle alors de personnalisation dans un lecteur sécurisé (HSM ou Host Security Module). Cette technique de personnalisation ne pose en principe pas de problème car le module de personnalisation est sûr, c'est-à-dire non piratable, que ce soit du point de vue de sa clé maître ou du point de vue de son algorithme de reconstitution des clés.

Mais, de plus en plus souvent, la personnalisation s'effectue dans des lecteurs versatiles (non dédiés à une application donnée). Le fournisseur d'application est alors identifié au moyen d'une carte à puce dite maître introduite dans ce lecteur afin de l'autoriser à intervenir sur un lot de puces donné. Cette technique est connue sous le nom de module d'application sécurisé (SAM ou Secure Application Module), la carte maître constituant ce module. Une telle technique fragilise la phase de personnalisation du point de vue des fraudes éventuelles dans la mesure où les cartes à puce maître sont piratables.

Une technique de piratage habituelle consiste à provoquer des erreurs (injections de fautes) dans l'exécution de l'algorithme de chiffrement exécuté par la carte maître. A partir d'une analyse statistique du comportement de la carte et notamment de sa consommation, le pirate parvient à percer le secret de la carte.

Or, le risque pour les cartes esclaves est important en cas de fraude. En effet, si un pirate parvient à découvrir le secret (la ou les clés) d'une carte maître, il n'existe pas d'autre solution que de rappeler (retirer de la circulation) l'ensemble des cartes qui ont été valablement personnalisées avec ce secret afin de bloquer l'utilisation de cartes qui seraient frauduleusement personnalisées avec la clé maître piratée. Les systèmes actuels ne sont en effet pas capables de faire alors la différence entre une bonne et une mauvaise carte esclave.

Les documents FR 2 681 165 et US 2003/0 212 894 décrivent des exemples de procédés selon l'art antérieur.

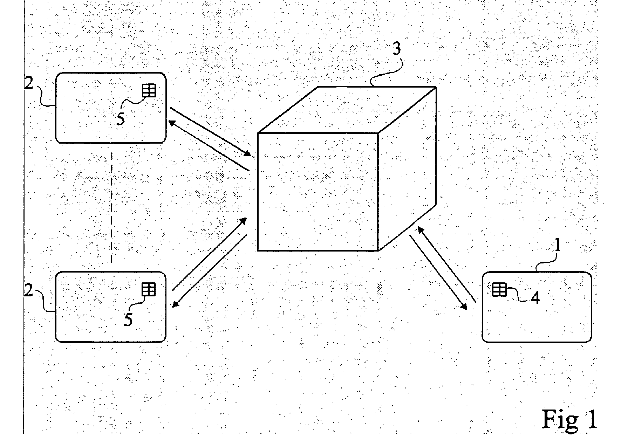

La figure 1 représente, de façon très schématique, un exemple de système connu de personnalisation de clés de cartes à puce par une carte maître. Un tel système met en oeuvre une clé maître Km, propre au fournisseur de l'application, par exemple contenue dans la puce 4 d'une carte maître 1. Cette clé Km sert à reconstituer les clés secrètes Ks des puces 5 d'un lot de cartes esclaves 2 pour y transférer un programme applicatif ou toute autre information sensible. Les deux cartes communiquent (flèches en figure 1) par l'intermédiaire d'un module ou lecteur 3 considéré comme sûr, c'est-à-dire dans lequel les échanges d'informations sont considérés comme non piratables.

A l'issue de la phase de personnalisation, les cartes 2 contiennent une ou plusieurs clés Ks' dédiées aux applications qu'elles sont susceptibles de mettre en oeuvre et qui remplacent la clé Ks native. Par la suite, lors de l'utilisation de la carte esclave, des processus d'authentification vérifient la validité de la clé Ks'.

Pour limiter les fraudes, plusieurs techniques sont classiquement mises en oeuvre. Une première technique consiste à utiliser des clés spécifiques par session de personnalisation de façon à rendre inutilisable une clé piratée lors d'une autre session de personnalisation. Une telle technique n'est toutefois pas utilisable dans le cas des cartes à puce maîtres (cas où le SAM est constitué d'une carte à puce) car celles-ci intègrent alors une clé maître Km qui est donc toujours la même pour une carte donnée.

Une deuxième technique connue consiste en une procédure de ratification. Elle consiste à utiliser un compteur qui est incrémenté à chaque fois que la clé maître Km est utilisée. L'usage de la clé Km est alors bloqué après un certain nombre d'utilisations pour reconstituer des clés secrètes. Le nombre limite est choisi pour être inférieur au nombre requis pour pirater une clé par analyses statistiques. Cette technique est lourde à mettre en oeuvre. De plus, s'il est souhaitable que le mécanisme de sécurité évite la personnalisation de cartes esclaves frauduleuses en utilisant une clé maître piratée, il n'est pas souhaitable qu'il bloque un système de personnalisation industriel en limitant la validité (en nombre d'utilisations) d'une carte maître en l'absence de tentative de piratage.

Par conséquent, les systèmes de protection actuels ne sont pas satisfaisants pour des systèmes de personnalisation de type module d'application sécurisé (SAM) utilisant des cartes à puce maître.

### Résumé de l'invention

La présente invention vise à pallier les inconvénients des méthodes connues.

La présente invention vise notamment à personnaliser des clés dans des éléments électroniques (par exemple, des cartes à puce).

L'invention vise également à proposer une solution compatible avec l'utilisation de cartes à puce en guise de modules d'applications sécurisés.

Pour atteindre ces objets ainsi que d'autres, la présente invention prévoit un procédé de personnalisation d'éléments électroniques, par remplacement dans une mémoire non-volatile de chacun d'eux d'une première clé secrète par une deuxième clé secrète, au moyen d'un module d'authentification sécurisé générant automatiquement ladite deuxième clé après avoir reconstitué la première à partir d'un identifiant de l'élément en cours de personnalisation, consistant à conditionner, côté module d'authentification, la fourniture de la deuxième clé à destination d'un élément courant à la réception d'un message de confirmation du remplacement de clé d'au moins un élément précédent.

Selon un mode de mise en oeuvre de la présente invention, un compteur du module totalise le nombre de messages de confirmation successifs non reçus pour des éléments précédents et compare ce nombre par rapport à un seuil mémorisé pour autoriser la personnalisation de l'élément courant, le compteur étant réinitialisé à chaque fois qu'un élément courant confirme le remplacement de sa clé.

Selon un mode de mise en oeuvre de la présente invention, les échanges entre l'élément et le module sont codés par une donnée généré par ledit module et changeant à chaque nouvel élément.

Selon un mode de mise en oeuvre de la présente invention, une même clé secrète d'un élément électronique est remplacée par plusieurs deuxièmes clés.

Selon un mode de mise en oeuvre de la présente invention, le module d'authentification est une carte à puce.

Selon un mode de mise en oeuvre de la présente invention, ledit élément est une carte à puce.

La présente invention prévoit également un système de personnalisation de clés dans des cartes à puces.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment est destinée à exposer l'état de la technique et le problème posé ; et
la figure 2 illustre un mode de mise en oeuvre de la présente invention.

### Description détaillée

Les mêmes éléments ont été désignés par les mêmes références aux différentes figures. Pour des raisons de clarté, seuls les éléments et étapes qui sont utiles à la compréhension de l'invention ont été représentés aux figures et seront décrits par la suite. En particulier, les opérations effectuées lors des étapes de chiffrement ou de codage n'ont pas été détaillées quand elles font appel à des traitements en eux-mêmes classiques. De plus, l'utilisation faite des clés secrètes issues de la phase de personnalisation n'a pas été détaillée, cette utilisation ne faisant pas l'objet de l'invention qui est compatible avec toute utilisation ultérieure classique. De même, la constitution d'un lecteur de personnalisation informatique à partir de cartes maîtres n'a pas été détaillée, l'invention étant compatible avec tout lecteur de personnalisation classique. Seul le programme de personnalisation exécuté par le lecteur est propre à l'invention, mais ne requiert pas de modification structurelle du lecteur.

L'invention sera décrite par la suite en relation avec un exemple d'application où le module d'application sécurisé (SAM) est une carte à puce intégrant (contenant en mémoire non volatile) une clé maître, l'algorithme de chiffrement symétrique et l'algorithme de reconstitution des clés secrètes. Elle s'applique toutefois plus généralement à n'importe quel module de personnalisation de type SAM, et à n'importe quel processus de personnalisation d'un élément électronique (par exemple, une carte à puce) utilisant une clé secrète native pour communiquer, par un processus de chiffrement symétrique, avec un module d'application sécurisé (SAM) de type carte à puce maître.

Une caractéristique de la présente invention est de conditionner, côté carte maître, la personnalisation d'une carte courante à la réception d'une confirmation par une carte précédente que sa clé secrète native a bien été remplacée dans sa mémoire non volatile. En d'autres termes, l'invention s'assure que la procédure de personnalisation d'une carte a été menée à terme avant d'autoriser la personnalisation d'autres cartes par ce même module.

Ainsi, la carte à puce maître est protégée contre des tentatives de piratage consistant à perturber son fonctionnement par des injections de fautes. En effet, le pirate ne pourra pas exécuter les multiples tentatives qui sont nécessaires pour effectuer une analyse statistique, la carte maître étant bloquée si les personnalisations précédentes ne sont pas achevées. Si un pirate parvient à dérober une carte maître, il doit également dérober un lot de cartes esclaves à personnaliser, ce qui réduit considérablement les risques de fraude.

Par contre, la carte maître n'est pas limitée dans son nombre d'utilisations si elle n'est pas attaquée.

Côté carte à personnaliser, la clé secrète native ne peut être utilisée qu'une seule fois. En effet, comme elle est remplacée par une nouvelle clé en fin de personnalisation, toute tentative de reproduire, avec une même carte esclave, une procédure de personnalisation est vouée à l'échec.

Pour la mise en oeuvre de l'invention, une carte esclave doit contenir des moyens pour calculer une signature symétrique (MAC ou Message Authentication Code). Cela ne posera en pratique pas de problème car la carte à puce est généralement pourvue d'un microprocesseur auquel il suffit d'adjoindre cette fonction (de façon matérielle et/ou logicielle).

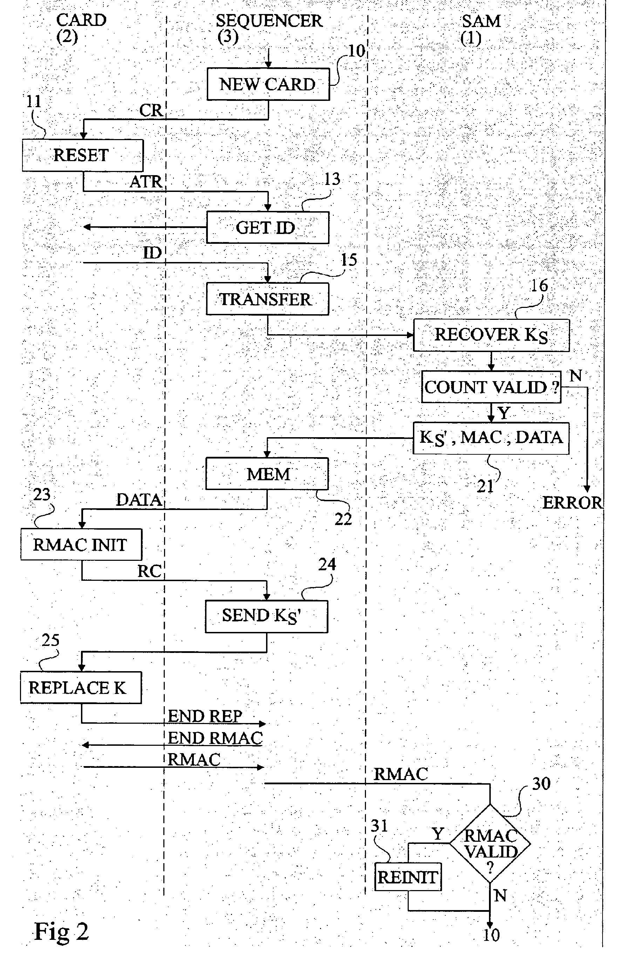

La figure 2 illustre un mode de mise en oeuvre du procédé de l'invention. Cette figure illustre les échanges, par l'intermédiaire d'un lecteur 3 (figure 1), entre une carte à puce 2 à personnaliser et une carte maître 1. Les opérations côté carte maître (SAM) sont en partie droite de la figure tandis que les opérations côté carte à personnaliser (CARD) sont côté gauche. Les opérations exécutées par le lecteur (SEQUENCER) sont au centre. Le programme de personnalisation est, à l'exception des algorithmes de chiffrement et des clés, préférentiellement contenu dans le lecteur 3 qui possède la capacité de traitement la plus importante. Les cartes maître et à personnaliser possèdent également des moyens d'interprétation de commandes qui leur sont respectivement destinées.

Le procédé de personnalisation de l'invention sera exposé ci-après en relation avec la personnalisation d'une seule carte. Toutefois, l'intérêt de l'invention réside dans la personnalisation de nombreuses cartes esclaves au moyen d'une même carte maître.

On suppose que le système a déjà été initialisé et que plusieurs cartes ont déjà été personnalisées.

Lorsqu'il détecte l'introduction d'une nouvelle carte CARD à personnaliser (bloc 10, NEW CARD), le lecteur SEQUENCER envoie une impulsion électrique CR de réinitialisation (bloc 11, RESET) de cette carte. Cette étape est connue sous la dénomination "Cold Reset". De façon indépendante et classique, le lecteur vérifie, de préférence à chaque introduction d'une nouvelle carte CARD, que la carte maître SAM est toujours présente.

Suite à sa réinitialisation, le microprocesseur de la carte 2 sélectionne son programme dit de base. Elle envoie une réponse ATR (Answer To Reset) à la réinitialisation. Cette réponse a pour effet d'indiquer au lecteur que la carte 2 est prête à entamer une procédure de personnalisation.

Le lecteur 3 lit alors dans la carte (bloc 13, GET ID) un identifiant unique (ID) tel que par exemple un numéro de série. La carte 2 retourne l'identifiant ID au lecteur. Selon un exemple particulier, la lecture de l'identifiant s'effectue par l'intermédiaire d'une demande de donnée dite CPLC (Card Production Life Cycle) contenant notamment cet identifiant unique de la carte.

L'identifiant ID est transmis (bloc 15, TRANSFERT) par le lecteur à la carte SAM (le cas échéant de façon chiffrée).

A partir de l'identifiant ID, le microprocesseur de la carte 1 dérive (par exemple par lecture d'une table en mémoire), à partir de la clé maître qu'elle contient en mémoire non volatile, la clé secrète Ks de la carte 2 (bloc 16, RECOVER Ks). Elle est donc désormais en mesure de chiffrer les informations qu'elle envoie à destination de la carte 2 en cours de personnalisation.

Les étapes décrites ci-dessus correspondent au fonctionnement classique d'initialisation d'une personnalisation par récupération, côté carte maître, de la clé secrète de la carte à personnaliser.

Selon l'invention, la carte maître génère alors (bloc 21, Ks' DATA), pour transmission vers le lecteur, une nouvelle clé secrète Ks', chiffrée avec la clé native Ks et une donnée DATA. Par exemple, la donnée DATA est la valeur d'un compteur contenu dans la carte SAM et incrémenté à chaque personnalisation, ou un nombre tiré aléatoirement pour changer à chaque personnalisation. Selon le mode de mise en oeuvre illustré, un code d'authentification de message MAC (Message Authentication Code) est également utilisé dans cette étape.

Le lecteur mémorise (bloc 22, MEM) la clé Ks' chiffrée et transmet à la carte 2 la donnée DATA en lui demandant d'initier une session RMAC (Response Message Authentication Code) sur la base de cette donnée DATA (bloc 22, RMAC INIT). La carte 2 envoie au lecteur un code de réponse RC.

La génération de la clé Ks' par la carte SAM (bloc 21) est précédée (exemple représenté) ou suivie d'un test (bloc 20, COUNT VALID ?) de l'état d'un compteur dont le rôle sera décrit par la suite. Pour l'instant, on se contente de noter que si ce test échoue, la carte SAM se met en erreur (ERROR) et, par exemple, se bloque.

A réception du code de réponse RC envoyé par la carte, le lecteur fait suivre à la carte 2 la nouvelle clé secrète chiffrée (signée) par l'ancienne clé Ks et codée par le MAC (bloc 24, SEND Ks').

La carte 2 décode la (nouvelle) clé chiffrée, puis la déchiffre en utilisant sa clé secrète native. Elle remplace alors sa clé native par la nouvelle clé secrète (bloc 25, REPLACE K).

On notera que l'écrasement de clé côté carte 2 n'interfère pas avec le code utilisé pour le MAC tant que la session reste valide.

La carte 2 envoie un code END REP au lecteur signifiant qu'elle a terminé le changement de clé secrète. Le lecteur envoie alors à la carte 2 une demande END RMAC de fin de session MAC afin de récupérer de celle-ci le code RMAC.

Ce code RMAC est transmis à la carte SAM qui le valide en utilisant la donnée DATA qu'il a stocké depuis sa génération (bloc 30, RMAC VALID ?). Si le RMAC est validé, le lecteur réinitialise son compteur d'appel à la fonction de reconstruction de clé (bloc 32, REINIT). Dans le cas contraire, ce compteur reste incrémenté de 1.

La personnalisation de la carte courante est terminée. Le lecteur-séquenceur 3 se met en attente d'une nouvelle carte 2 à personnaliser et le processus reprend à l'étape 10.

Dans un mode de réalisation simplifié, la carte SAM est bloquée (est incapable de dériver un clé secrète à partir d'un identifiant de carte à puce) dès que le compteur est différent de 0.

Dans un mode de réalisation préféré, on fixe un seuil au compteur avant de bloquer la carte SAM. Cela permet notamment de préserver un fonctionnement correct à l'apparition d'une ou plusieurs (en nombre limité) carte défaillantes avec lesquelles la personnalisation échoue. Le seuil est choisi en fonction des tolérances habituelles de fabrication. Le compteur reste réinitialisé dès qu'une personnalisation se déroule normalement.

Côté carte 2, la commande de personnalisation n'est exécutable qu'une seule fois dans la mesure où la clé native est écrasée par la nouvelle clé.

Il est à noter que l'invention est compatible avec toute méthode classique de dérivation de clé, l'invention ne participant pas à la génération de cette clé mais se contentant de l'exploiter pour chiffrer la nouvelle clé. De plus, plusieurs clés peuvent être utilisées au sein d'un même circuit et être choisies, par exemple, en fonction de l'application ou de l'utilisateur.

Bien entendu, la présente invention est susceptible de diverses variantes et modifications qui apparaîtront à l'homme de l'art. En particulier, la réalisation pratique de l'invention par une mise en oeuvre matérielle ou logicielle est à la portée de l'homme du métier à partir des indications fonctionnelles données ci-dessus. De plus, le choix du nombre de personnalisations non terminées acceptables avant rejet de la carte maître est à la portée de l'homme du métier en fonction de l'application. En outre, l'exploitation d'une mise en défaut (erreur) de la carte maître dépend de l'application et peut, par exemple, correspondre à une procédure de blocage classique.

## Revendications

1. Procédé de personnalisation d'éléments électroniques (2), par remplacement dans une mémoire non-volatile de chacun d'eux d'une première clé secrète (Ks) par une deuxième clé secrète (Ks'), au moyen d'un module d'authentification sécurisé (1) générant automatiquement ladite deuxième clé après avoir reconstitué la première à partir d'un identifiant de l'élément en cours de personnalisation, **caractérisé en ce qu'**il consiste à conditionner, côté module d'authentification, la fourniture de la deuxième clé à destination d'un élément courant à la réception d'un message de confirmation du remplacement de clé d'au moins un élément précédent.

2. Procédé selon la revendication 1, dans lequel un compteur du module (1) totalise le nombre de messages de confirmation successifs non reçus pour des éléments précédents et compare ce nombre par rapport à un seuil mémorisé pour autoriser la personnalisation de l'élément courant (2), le compteur étant réinitialisé à chaque fois qu'un élément courant confirme le remplacement de sa clé.

3. Procédé selon la revendication 1 ou 2, dans lequel les échanges entre l'élément et le module sont codés par une donnée (DATA) générée par ledit module et changeant à chaque nouvel élément.

4. Procédé selon l'une quelconque des revendications 1 à 3, dans lequel une même clé secrète d'un élément électronique est remplacée par plusieurs deuxièmes clés.

5. Procédé selon l'une quelconque des revendications 1 à 4, dans lequel le module d'authentification est une carte à puce.

6. Procédé selon l'une quelconque des revendications 1 à 5, dans lequel ledit élément est une carte à puce.

7. Système de personnalisation de clés dans des cartes à puces, **caractérisé en ce qu'**il comporte des moyens pour la mise en oeuvre du procédé selon l'une quelconque des revendications 1 à 6.

## Claims

1. A method for personalizing electronic elements (2), by replacing in a non-volatile memory of each of them a first secret key (Ks) with a second secret key (Ks'), by means of a secure authentication module (1) automatically generating said second key after having restored the first one from an identifier of the element being personalized, **characterized in that** it comprises conditioning, on the authentication module side, the provision of the second key to a current element to the reception of a message confirming the key replacement of at least one preceding element.

2. The method of claim 1, wherein a module counter (1) totalizes the number of successive confirmation messages not received for preceding elements and compares this number with a stored threshold to allow personalization of the current element (2), the counter being reset each time a current element confirms the replacement of its key.

3. The method of claim 1 or 2, wherein the exchanges between the element and the module are coded by data (DATA) generated by said module and changing for each new element.

4. The method of any of claims 1 to 3, wherein a same secret key of an electronic element is replaced with several second keys.

5. The method of any of claims 1 to 4, wherein the authentication module is a smart card.

6. The method of any of claims 1 to 5, wherein said element is a smart card.

7. A system for personalizing keys in smart cards, **characterized in that** it comprises means for implementing the method of any of claims 1 to 6.

## Patentansprüche

1. Ein Verfahren zum Personalisieren von elektronischen Elementen (2) durch Ersetzen in einem nicht-flüchtigen Speicher für jeden von denen eines ersten geheimen Schlüssel (Ks) mit einem zweiten geheimen Schlüssel (Ks'), und zwar durch Mittel eines sicheren Authentifizierungsmoduls (1), welches automatisch den zweiten Schlüssel generiert, und zwar nachdem es den Ersten von einem Identifizierer des Elements, das personalisiert wurde, wiederhergestellt hat, **gekennzeichnet dadurch dass** es Folgendes aufweist:
Konditionieren, auf der Authentifizierungsmodulseite, des Vorsehens des zweiten Schlüssels an ein aktuelles Element auf den Empfang einer Nachricht, die das Ersetzen des Schlüssels von wenigstens einem vorangegangenen Element bestätigt.

2. Verfahren nach Anspruch 1, wobei ein Modulzähler (1) die Anzahl der erfolgreichen Bestätigungsnachrichten, die nicht für vorangegangene Elemente empfangen wurden, summiert und diese Anzahl mit einer gespeicherten Schwelle vergleicht, um eine Personalisierung des aktuellen Elements (2) zu ermöglichen, wobei der Zähler jedes Mal zurückgesetzt wird, wenn ein aktuelles Element das Ersetzen seines Schlüssels bestätigt.

3. Verfahren nach Anspruch 1 oder 2, wobei der Austausch zwischen dem Element und dem Modul durch Daten codiert werden (DATA), die durch das Modul generiert wurden, und, die sich für jedes neue Element ändern.

4. Verfahren nach einem der Ansprüche 1 bis 3, wobei ein gleicher geheimer Schlüssel eines elektronischen Elements mit mehreren zweiten Schlüsseln ersetzt wird.

5. Verfahren nach einem der Ansprüche 1 bis 4, wobei das Authentifizierungsmodul eine Smart Card ist.

6. Verfahren nach einem der Ansprüche 1 bis 5, wobei das Element eine Smart Card ist.

7. Ein System zum Personalisieren von Schlüsseln in Smart Cards, **gekennzeichnet dadurch, dass** es Mittel zum Implementieren des Verfahrens eines der Ansprüche 1 bis 6 aufweist.
